**Europäisches Patentamt**

**European Patent Office**

**Office européen des brevets**

(11) Veröffentlichungsnummer : **0 363 891 B1**

(12) # EUROPÄISCHE PATENTSCHRIFT

(45) Veröffentlichungstag der Patentschrift :
**22.07.92 Patentblatt 92/30**

(51) Int. Cl.$^5$ : **C04B 16/06**

(21) Anmeldenummer : **89118778.3**

(22) Anmeldetag : **10.10.89**

(54) **Faserverstärktes hydraulisch abgebundenes Baumaterial und Verfahren zu seiner Herstellung.**

(30) Priorität : **13.10.88 LU 87367**

(43) Veröffentlichungstag der Anmeldung :
**18.04.90 Patentblatt 90/16**

(45) Bekanntmachung des Hinweises auf die
Patenterteilung :
**22.07.92 Patentblatt 92/30**

(84) Benannte Vertragsstaaten :
**AT BE CH DE ES FR GB IT LI LU NL**

(56) Entgegenhaltungen :
**EP-A- 0 155 520**
**AT-B- 371 094**

(73) Patentinhaber : **POLYFIBRE SA**
**Chemin Plantaz 36**
**CH-1260 Nyon (CH)**

(72) Erfinder : **Studinka, Josef, Dr.**
**Dolderstrasse 92**
**CH-8032 Zürich (CH)**
Erfinder : **Meier, Peter E., Dr.**
**Pfannenstielstrasse 18**
**CH-8820 Wädenswil (CH)**

(74) Vertreter : **Scheidegger, Werner & Co.**
**Siewerdtstrasse 95**
**CH-8050 Zürich (CH)**

EP 0 363 891 B1

## Beschreibung

Die Erfindung betrifft ein Baumaterial bestehend aus Bindemitteln, vorzugsweise hydraulische Bindemittel wie Zement, Gips, Alkalialuminate, Alkalisilikate, Füll- und Zuschlagstoffe sowie faserartige, beziehungsweise faserförmige Mischungsbestandteile. Die Mischungen sind insbesondere geeignet zur Herstellung von dünnschaligen Baumaterialien, beispielsweise ebene Platten, gewellte Platten, Formkörper, Rohre sowie verschiedenste Dach- und Fassadenmaterialien.

Diese faserverstärkten Baumaterialien zeichnen sich dadurch aus, dass sie bei geringer Dicke verhältnismässig hohe Festigkeiten, gleichzeitig verbunden mit hohen Schlagzähigkeiten aufweisen. Bis vor wenigen Jahren wurde bei solchen Mischungen als faserige Mischungsbestandteile fast ausnahmslos Asbest verwendet. Nachdem sich ab ca. 1978 abzuzeichnen begann, dass Asbest aus den verschiedensten Gründen - wirtschaftlich, als auch wegen möglicher Gesundheitsgefährdung - zukünftig nicht mehr in diesem Ausmasse industriell eingesetzt werden kann, begann eine intensive Suche nach neuen faserhaltigen Baustoffmischungen, welche die altbewährten Asbestzementprodukte der Baustoffindustrie ablösen könnten.

Als eine der ersten Erfindungen zur neuen Generation von Faserzementprodukten wurde 1977 die Verwendung von Hochmodul-Polyvinylalkoholfasern zum Patent angemeldet (I). In der Zwischenzeit sind zahlreiche weitere faserartige bzw. faserförmige Stoffe auf der Basis von Zellulose, Glas, Polyethylen, Polypropylen, Polyacrylnitril, Polyamiden etc. zum Patent angemeldet worden.

Von den zahlreichen für den Zementeinsatz vorgeschlagenen Fasertypen haben sich aus den verschiedensten technischen als auch wirtschaftlichen Gründen nur wenige Fasern im industriellen Einsatz behaupten können. Anlässlich der 25. Internationalen Chemiefasertagung 1986 in Dornbirn, Oesterreich wurden zum Thema "Chemiefasern-Alternative für Asbest" in den Spezialvorträgen unter dem Titel Zementverstärkung mit Asbestalternativen (2, 3, 4, 5, 6, 7, 8, 9) der letzte Stand der technisch realisierbaren Möglichkeiten vorgestellt. Es zeigte sich, dass vom technischen Gesichtspunkt aus gesehen die Polyvinylalkohol-Hochmodulfaser die wohl interessanteste Armierungsfaser für den Zementeinsatz darstellt. Von der wirtschaftlichen Seite her betrachtet, kann diese Feststellung leider nicht gemacht werden. Faserzementprodukte hergestellt mit Hochmodul-Polyvinylalkoholfasern sind zwar qualitativ hochwertig, doch haben diese auf dem Markt aus preislichen Gründen kaum die Chance, den Platz einzunehmen, welcher ursprünglich die Asbestzement-Produkte innehatten.

Nach der Lehre der DE-PS 2 850 337 müssen Polyvinylalkohol-Fasern einen E-Modul von minimum 130 g/dtex und eine Bruchdehnung von maximum 4-8 % aufweisen, damit sie in der Lage sind, Zement zu verstärken.

Solche Hochmodul-Fasern können nur nach einem technisch aufwendigen Spinnverfahren hergestellt werden, was die hohen Kosten für diese Spezialfasern erklärt.

Es wurden bereits Vorschläge publiziert, wie PVA-Fasern enthaltende Produkte wirtschaftlich hergestellt werden können.

So schlägt die EP-A-0 220 649 vor, sehr feine PVA-Fasern zu verwenden, welche die Herstellung von Platten unter Verwendung eines geringen Fasergehaltes auf einer Hatschek-Anlage erlaubt. Damit können Einsparungen bei den Prozessfasern (Zellstoff-Pulpe, synthetische Pulpe) erzielt werden, da die sehr feinen PVA-Fasern gleichzeitig als Verstärkungsfasern und als Prozessfasern wirken.

Die sehr feinen PVA-Fasern bringen aber auch verschiedene Nachteile mit sich, so dass diese nicht generell in der regulären Herstellung von Faserzementprodukten eingesetzt werden können.

Bis heute waren die Produktionskosten für sehr feine Hochmodul-PVA-Fasern wesentlich höher als für Fasern mit konventionellen Durchmessern. In jedem Fall sind sie aber teurer als Zellstoff- oder synthetische Pulpe, welche sie ersetzen sollen.

Auch ist die Herstellung der Faseraufschlämmung komplizierter, und es wird eine spezielle anorganische Dispergierhilfe benötigt, um die feinen Fasern gleichmässig zu verteilen. Die empfohlene Dispergierhilfe, nämlich Sepiolit, weist zudem eine potentielle Gesundheitsgefährdung auf, vergleichbar mit jener von Asbest. Ferner müssen die sehr feinen Fasern wesentlich kürzer geschnitten werden, auf 2-3 mm, als übliche Fasern, deren Schnittlängen 4-6 mm betragen, da sonst Probleme beim Verspinnen auftreten.

Aus EP-A-0 155 520 gehen weitere Möglichkeiten hervor, um die Kosten für die in Faserzementprodukten verwendeten Verstärkungsfasern zu senken.

Die Erfinder haben festgestellt, dass eine Möglichkeit besteht, einen wesentlichen Teil der teuren Hochmodul-PVA-Fasern durch billigere Hochmodul-PAN-Fasern zu ersetzen, ohne dabei die ausgezeichneten Produktionseigenschaften zu verlieren.

Es hat sich allerdings gezeigt, dass die beschriebenen Vorteile nur zutreffen, solange die Faserzementprodukte noch jung sind. Sobald die Produkte während einiger Zeit der Witterung ausgesetzt sind, ändern sich die allgemeinen Produkteigenschaften, so nimmt insbesondere die Zähigkeit der Produkte schneller ab, als wenn ausschliesslich PVA-Fasern verwendet worden wären.

Die Erklärung für dieses Alterungsverhalten findet sich im Unterschied der Affinität und Bindung der PVA- und PAN-Fasern an die Zementmatrix.

Während die Bindung der PVA-Fasern an den Zement hauptsächlich auf physikalischen Kräften beruht, entwickeln die PAN-Fasern chemische Bindungen mit der Zementmatrix, bedingt durch die Hydrolyse der sich auf der äussersten Oberfläche der PAN-Fasern befindlichen Nitrilgruppen. Während der Alterung des Produktes neigen die daraus resultierenden Carboxylgruppen dazu, zuzunehmen und dabei nimmt gleichzeitig die Bindung der Fasern an die Matrix zu. All diese Reaktionen bewirken eine erhöhte Versprödung der Produkte.

Alle bisher bekannt gewordenen Möglichkeiten, die Ausgangsmaterialien für hochqualitative Faserzementprodukte zu verbilligen, sind gescheitert und dies wegen Fehlkalkulationen für das gesamte Herstellungssystem oder aus technischen Gründen.

Die vorliegende Erfindung macht es nun möglich, hochqualitative Zementprodukte mit einem ausgezeichneten Alterungsverhalten herzustellen, indem ausschliesslich spezielle PVA-Fasern eingesetzt werden.

Es wurde nun überraschenderweise gefunden, dass es unter bestimmten Bedingungen möglich ist, hochwertige Faserzementprodukte herzustellen, unter Einsatz von Polyvinylalkohol-Fasern, welche den Kriterien der zitierten DE-PS 2 850 337 nicht genügen. Die erfindungsgemäss verwendeten Fasern haben den Vorteil, dass sie nach einem konventionellen Nass-Spinnverfahren kostengünstig hergestellt werden können.

Die Mischungen zur Herstellung der erfindungsgemässen faserverstärkten dünnschaligen Baumaterialien bestehen bevorzugt aus einem anorganischen Bindemittel wie Zement, welche durch Hydratisieren aushärten. Besonders geeignet sind Portlandzement, Schmelzzement, Eisenportlandzement, Trasszement, Hochofenzement oder auch Gips.

Dem hydraulischen Bindemittel werden bevorzugt auch Füll-und Zuschlagstoffe wie Kalksteinmehl, amorphe Kieselsäuren, Flugaschen, Quarz, Kaoline, Talk, Gesteinmehl etc., zugesetzt.

Die erfindungsgemässen Polyvinylalkohol-Fasern werden dem zementartigen Material als Kurzschnitte in 1 - 10 Gew.-% zugesetzt. Die Fasern weisen eine Dehnung von 8,5 - 15% und eine Festigkeit von 4,0 - 9,0 cN/dtex auf. Solche PVA-Fasern werden aus Polymerisaten der allgemeinen Formel

$$(CH_2\text{-}CH(OH)\text{-})_n$$

mit Molekulargewichten von z.B. 20 000 - 100 000 und einer Dichte von 1,23 - 1,32 erhalten. Der PVA-Ausgangsrohstoff wird üblicherweise durch Verseifung von Polyvinylacetat hergestellt und die Fasern nach einem konventionellen Nassspinnprozess produziert (vgl. zum Beispiel: Handbook of Fiber Science and Technology, Volume IV, Fiber Chemistry, Marcel Dekker Inc., New York and Basel, ab Seite 547).

Solchen Polyvinylalkoholfasern können durch die Herstellung bedingt noch bis zu 20 Gew.-% an Natriumsulfat anhaften. Die Fasern werden bevorzugt in Schnittlänge von 2-12 mm zugemischt. Es können gleichmässig lange Einzelfasern als auch Fasern verschiedener Länge sowie auch gemahlene Fasern eingesetzt werden.

Der Titer der Einzelfasern kann in einem weiten Bereich schwanken, doch haben sich Titer im Bereich von 0,5-5 dtex bewährt. Die Fasern können in der Zementmatrix gleichmässig verteilt sein, oder aber bei speziellen Bauteilen an Stellen, welche gerichteten mechanischen Beanspruchungen ausgesetzt sind, in erhöhten Konzentrationen vorliegen. Die Fasern lassen sich auch in Form von Faservliesen, Bändchen, Netzen, Gewirken, Geweben etc. einsetzen.

Je nach Produktionsbedingungen der Fasern lassen sich deren Querschnitte auf mannigfaltige Art und Weise variieren, so dass von runden Fasern über multilobale Fasern bis zu Hohlfasern resultieren können. Es ist ebenso möglich, der Spinnlösung vor der Faserherstellung auch Pigmente, Füllstoffe und andere Zusätze zuzugeben. Da Polyvinylalkohol ein Substrat von hoher chemischer Reaktionsfähigkeit darstellt, so ist es auch möglich, zur Anpassung von Faser-Matrix-Haftung sämtliche gebräuchliche funktionelle Gruppen über Additionsreaktionen, Substitutionsreaktionen oder Radikalreaktionen mit den entsprechenden chemischen Verbindungen einzuführen. Die Fasern können aber auch mittels Avivagen oder Haftvermittler ohne eigentliche Reaktionen modifiziert werden.

Die als Armierungsfasern eingesetzten erfindungsgemässen Polyvinylalkoholfasern können dem zementartigen Substrat allein oder in Abmischungen mit anderen Armierungsfasern beigemischt werden. Als zusätzliche Armierungsfasern eignen sich auch Hochmodul-Polyvinylalkoholfasern sowie Naturfasern wie Ramiefasern oder Zellstoffasern.

Prozessbedingt werden wässrige Faserzementmischungen, welche mit Hilfe von Sieben entwässert werden, auch noch zusätzliche faserige Materialien zugesetzt, welche das Zementrückhaltevermögen erhöhen. Als solche Faserstoffe eignen sich hauptsächlich Holzstoff-Fasern, Altpapier, Zellstoff-Fasern sowie Fibride aus Kunststoffen wie Polypropylen, Polyethylen etc.

Die Erfindung soll anhand der Beispiele 1-4 näher erläutert werden, wobei diese Beispiele die vorliegende Erfindung in keiner Weise einschränken sollen.

3

Beispiele 1 - 4

**Herstellung der Mischungen für die Entwässerung auf einer Hatschekmaschine**

In einem Pulper wurden 1 m³ Wasser vorgelegt und die in Tabelle 1 angegebene Menge an Filterfasern während 10 Minuten gepulpt. Anschliessend wurden die Armierungsfasern gemäss Beispielen 1-4 zugesetzt und während weiteren 3 Minuten gepulpt.

Die gemäss der vorliegenden Erfindung verwendeten PVA-Fasern sowie die gemäss DE-PS 2 850 337 geschützten Hochmodul-PVA-Fasern wiesen die folgenden textilmechanischen Eigenschaften auf:

| Fasereigenschaften | Hochmodul PVA-Fasern gemäss DE-PS 28 50 337 | PVA-Fasern gemäss vorliegender Erfindung |
|---|---|---|
| Schnittlänge | 6 mm | 6 mm |
| Titer dtex | 2.0 | 1.6 |
| Bruchdehnung % | 7.4 | 9.6 |
| Reissfestigkeit cN/dtex | 11.7 | 6.0 |
| A-Modul CN/dtex | 279.0 | 120.0 |

In einem Horizontalmischer wurde weiter eine wässrige Aufschlämmung von Zement mit den entsprechenden Zuschlagstoffen hergestellt und während 15 Minuten gerührt. In dieser Mischung wurden die aufgeschlämmten Fasern aus dem Pulper zugeführt und 5 Minuten gemischt.

Diese gesamte wässrige Faser-Zement-Aufschlämmung wurde über einen Durchlaufmischer auf einen Feststoffgehalt von 80 g/l verdünnt und in dem Stoffkasten einer Hatschekmaschine eingespiesen. In den Durchlaufmischer wurden gleichzeitig eine verdünnte wässrige Lösung eines Flockungshilfsmittels auf der Basis von Polyacrylamid zudosiert, um die Zementretention während der nachfolgenden Entwässerungsstufe weiter zu verbessern.

**Herstellung der Faserzementplatten**

Mit den Mischungen 1-4 wurden auf einer 3-Siebzylinder-Hatschekmaschine durch 7 Umdrehungen der Formatwalze Faserzementplatten von 6 mm Dicke hergestellt. Anschliessend wurden diese Platten zwischen geölten Blechen während 30 Minuten bei einem spezifischen Druck von 180 bar gepresst, so dass nach der Pressung Platten einer Dicke von 4,9 mm resultierten. Nach dem Ausblechen wurden die Platten während 28 Tagen in einem Klimaraum bei 100 % RH ausgehärtet und anschliessend nach ISO geprüft. Die erhaltenen Testresultate sind in Tabelle 2 zusammengestellt.

Tabelle 1: Mischungszusammensetzung der Patentbeispiele 1-4

| Beispiel Nr. | Hochmodul PVA-Fasern gemäss DE-PS 2 850 337 | PVA-Fasern gemäss Erfindung | Mischungsbestandteile | | | ( % Gewicht) Portland-zement | Kalk-steinmehl | amorphe Kiesel-säure |
| | | | Zell-stoff | Alt-papier | Fib-rid* | | | |
|---|---|---|---|---|---|---|---|---|
| 1 | 2 | – | 2.5 | 2.5 | – | 63 | 20 | 10 |
| 2 | 1 | 1 | 2.5 | 2.5 | – | 63 | 20 | 10 |
| 3 | – | 2 | 2.5 | 2.5 | – | 63 | 20 | 10 |
| 4 | – | 2 | – | – | 3.5 | 64.5 | 20 | 10 |

* Pulplus (Polyaethylenfibrid, Du Pont)

| Vergleichs-beispiel gemäss EP-A-0155520 | Hochmudul PVA-Fasern | PAN-Faser ** | Mischungsbestandteile | | | (% Gewicht) Portland-zement | Kalkstein-mehl | amorphe Kiesel-säure |
| | | | Zell-stoff | Alt-papier | Fibrid *** | | | |
|---|---|---|---|---|---|---|---|---|
| 5 | 1 | 1 | 2,5 | 2,5 | 2,0 | 61 | 20 | 10 |

** "Dolanit-10" , Hoechst
*** "Pulpex EA", Hercules

EP 0 363 891 B1

Tabelle 2: Prüfresultate der gemäss Patentbeispiele 1-4 hergestellten Faserzementplatten (DIN-Prüfung)

| Bei-spiel | Biegefe-stigkeit $N/mm^2$ | Brucharbeit $kJ/m^2$ | Dichte g/ccm | Wasserauf-nahme % | Brucharbeit nach 1 Jahr Freibewitterung $kJ/m^2$ |
|---|---|---|---|---|---|
| 1 | $30.2 \pm 5.6$ | $3.08 \pm 0.67$ | $1.829 \pm 0.012$ | $15.5 \pm 0.5$ | $2.41 \pm 0.71$ |
| 2 | $28.9 \pm 1.3$ | $3.12 \pm 0.58$ | $1.831 \pm 0.013$ | $15.6 \pm 0.4$ | $2.38 \pm 0.58$ |
| 3 | $28.0 \pm 1.6$ | $2.98 \pm 0.72$ | $1.823 \pm 0.011$ | $15,8 \pm 0.6$ | $2.25 \pm 0.63$ |
| 4 | $28.3 \pm 1.4$ | $3.22 \pm 0.60$ | $1.872 \pm 0.014$ | $13.4 \pm 0.4$ | $2.80 \pm 0.59$ |
| 5 | $29.5 \pm 1.9$ | $2.95 \pm 0.63$ | $1.821 \pm 0.012$ | $15.8 \pm 0.4$ | $1.10 \pm 0.35$ |

Beispiel 1 zeigt den Stand der Technik, wobei durch den Zusatz von 2% Hochmodul-PVA-Fasern Produkte mit hohen spezifischen Festigkeiten, verbunden mit hohen Brucharbeiten resultieren.

Vergleichsbeispiel 5 zeigt, dass gemäss EP-A 0 155 520 auch billigere Fasermischungen zu ähnlichen Kurzzeiteigenschaften führen können, wobei aber nach einem Jahr Freibewitterung eine deutliche Versprödung eintritt.

Die erfindungsgemässen Beispiele 3 und 4 zeigen, dass auch mit billigen PVA-Fasern allein, welche niedrigere Festigkeiten und höhere Bruchdehnungen aufweisen, oder in Abmischungen (Beispiel 2) bruchmechanische Werte erreicht werden können, welche sonst nur mit den teuren Hochmodul-PVA-Fasern erhalten werden, ohne die nachteilige Versprödung gemäss EP-A 0 155 520 aufzuweisen.

Die Eigenschaften der Faserzementplättchen der erfindungsgemässen Beispiele 2-4 erfüllen die Forderungen des Marktes vollkommen und bestehen gleichzeitig auch das Kriterium der Wirtschaftlichkeit.

Die vorliegende Erfindung betrifft demnach ein dünnschaliges faserverstärktes Baumaterial, das dadurch gekennzeichnet ist, dass es 1-10 Gew.-% an kurzgeschnittenen Polyvinylalkoholfasern enthält, die eine Dehnung von 8,5 - 15 % und eine Festigkeit von 4,0-9,0 cN/dtex aufweisen, bzw. ein Verfahren zur Herstellung eines solchen faserverstärkten hydraulisch abebundenen Baumaterials bzw. die Verwendung von Polyvinylalkoholfasern mit den erwähnten Charakteristiken zur Herstellung eines solchen faserverstärkten Materials.

**Patentansprüche**

1. Faserverstärktes hydraulisch abgebundenes Baumaterial, dadurch gekennzeichnet, dass es 1-10 Gew.-% an kurzgeschnittenen Polyvinylalkoholfasern enthält, die eine Dehnung von 8,5-15 % und eine Festigkeit von 4,0-9,0 cN/dtex aufweisen.

2. Material nach Anspruch 1, dadurch gekennzeichnet, dass die Polyvinylalkoholfasern einen Titer von 0,5-5 dtex aufweisen.

3. Material nach Anspruch 1 und 2, dadurch gekennzeichnet, dass es ausserdem Glasfasern, Polypropylenfasern oder andere natürliche oder synthetische faserige Materialien enthält.

4. Material nach Anspruch 1 bis 3, dadurch gekennzeichnet, dass es ausserdem faserige Hilfsstoffe wie Holzstoff, Altpapier, Zellstoffe sowie Fibride aus Kunststoff enthält.

5. Material nach Anspruch 1 bis 4, dadurch gekennzeichnet, dass es ausserdem Füllstoffe wie Kalksteinmehl, amorphe Kieselsäure, Flugaschen, Quarzsand, Kaolin, Talk, Gesteinmehl, Attapulgit enthält.

6. Verfahren zur Herstellung eines faserverstärkten zementartigen Materials nach den Ansprüchen 1 bis 5, dadurch gekennzeichnet, dass man einem zementartigen Material 1-10 Gew.-% an kurzgeschnittenen Polyvinylalkoholfasern zusetzt, die eine Dehnung von 8,5 - 15% und eine Festigkeit von 4,0 - 9,0 cN/dtex aufweisen.

7. Verfahren nach Anspruch 6, dadurch gekennzeichnet, dass die verwendeten Polyvinylalkoholfasern eine Schnittlänge von 2-12 mm aufweisen und einheitlich lang sind, oder als eine Mischung verschieden langer Fasern zugesetzt werden.

## Claims

1. A fiber-reinforced hydraulically set building material, comprising about 1-10% by weight of polyvinylalcohol fibers cut to a short length which have an elongation of 8.5 - 15% and a strength of 4,0 to 9,0 cN/dtex.

2. The building material of claim 1, wherein said polyvinylalcohol fibers comprise a titer of 0,5 - 5 dtex.

3. The building material of claims 1 and 2, comprising further fibers of the group glass fibers, polypropylene fibers or other natural or synthetic fibrous materials.

4. The building material of claims 1 to 3, comprising further auxiliarly materials of the group wooden materials, paper waste, cellulose, and fibrids of plastic material.

5. The building material of claims 1 to 4, comprising further filler materials of the group limestone powder, amorphous silicic acid, flue dust, quartz sand, kaolin, talcum, mineral dust, attapulgite.

6. A method of producing a fiber-reinforced cement-like building material as defined in claims 1 to 5, comprising the steps of providing a cementitious material and of adding thereto 1-10% by weight polyvinylalcohol fibers cut to a short length which have an elongation of 8,5 - 15% and a strength of 4,0 to 9,0 cN/dtex.

7. The method of claim 6, wherein the cut length of said polyvinylalcohol fibers is in the range of 2-12 mm and said fibers are of a unitary length or are added as a mixture of fibers of differing lengths.

## Revendications

1. Matériau de construction à prise hydraulique renforcé de fibres, caractérisé en ce qu'il contient 1-10% en poids de fibres courtes en alcool polyvinylique, présentant une élongation de 8,5-15% et une résistance de 4,0-9,0 cN/dtex.

2. Matériau selon la revendication 1, caractérisé en ce que les fibres en alcool polyvinylique présentent un titre de 0,5-5 dtex.

3. Matériau selon les revendications 1 et 2, caractérisé en ce qu'il contient en plus des fibres de verre, des fibres en polypropylène ou d'autres matériaux fibreux naturels ou synthétiques.

4. Matériau selon la revendication 1 à 3, caractérisé en ce qu'il contient en plus des auxiliaires fibreux, comme de la pâte de bois, vieux papiers, cellulose ainsi que des fibrides en matière synthétique.

5. Matériau selon les revendications 1 à 4, caractérisé en ce qu'il contient en plus des matières de remplissage, comme de la pierre à chaux pulvérisée, acide silicique amorphe, cendre volante, sable siliceux, kaolin, talc, roche pulvérisée, attapulgite.

6. Procédé de fabrication d'un matériau à prise hydraulique renforcé de fibres selon les revendications 1 à 5, caractérisé en ce que l'on ajoute à un matériau cimenteux 1-10% en poids de fibres courtes en alcool polyvinylique ayant une élongation de 8,5-15% et une résistance de 4,0-9,0 cN/dtex.

7. Procédé selon la revendication 6, caractérisé en ce que les fibres en alcool polyvinylique présentent une longueur de coupe de 2-12 mm et sont de longueur uniforme ou sont ajoutées sous forme d'un mélange de fibres de longueurs différentes.